# EUROPÄISCHE PATENTSCHRIFT

(11) **EP 3 002 344 B1**
(45) Veröffentlichungstag und Bekanntmachung des Hinweises auf die Patenterteilung: **28.09.2016**
(21) Anmeldenummer: 14187290.3
(22) Anmeldetag: 01.10.2014
(51) Int. Cl.: C22B 3/18

(54) **Verfahren zum Behandeln eines Rohstoffes mit metallhaltigen Verbindungen**
Method for treating a raw material with metal-containing compounds
Procédé de traitement d'une matière première dotée de liaisons contenant du métal

(43) Veröffentlichungstag der Anmeldung: 06.04.2016
(73) Patentinhaber: Schneider-Planta Chemicals GmbH, 66571 Eppelborn-Dirmingen (DE)
(72) Erfinder: Schneider, Detlef, 66125 Saarbrücken (DE); Jahns, Thomas, 66119 Saarbrücken (DE); Planta, Ulrike, 66636 Tholey (DE)
(74) Vertreter: Wunderlich, Rainer

(56) Entgegenhaltungen:
- WO-A1-2008/015108
- WO-A2-01/36693
- CN-A- 102 337 228

## Beschreibung

Die Erfindung betrifft ein Verfahren zum Behandeln eines Rohstoffes mit metallhaltigen Verbindungen, gemäß dem Oberbegriff des Anspruchs 1.

Das Verfahren ist insbesondere zum Behandeln von Rohstoffen mit einem geringen Anteil von Metallen, insbesondere von sogenannten seltenen Erden, vorgesehen. Ein maßgebliches Problem bei den sogenannten seltenen Erden besteht darin, dass diese lediglich in einem Verbund mit anderen Erzen und Mineralien auftreten und darin nur einen sehr geringen Anteil bilden. Um seltene Erden zu gewinnen, ist es üblicherweise erforderlich, die bestehenden Verbindungen hoch zu erhitzen und mit Salz- oder Schwefelsäure oder anderen aggressiven Chemikalien herauszulösen und abzutrennen. Derartige konventionelle Verfahren sind sehr kostenintensiv und stark umweltbelastend.

Weiterhin ist es bekannt, aus Ausgangsstoffen Metallionen durch eine sogenannte mikrobielle Oxidation herauszulösen. Hierzu werden durch Eisen- und Schwefel-oxidierende Bakterien, aber auch organotrophe Bakterien und Pilze, durch biologische Laugung, auch Biolaugung oder Bioleaching genannt, die Metalle als Metallionen aus minderwertigen Armerzen herausgelöst. Dabei werden die abgebauten Armerze zerkleinert und das zerkleinerte Erzmaterial mit den Mikroorganismen unter Flüssigkeitszugabe behandelt. Durch diese Biolaugung wird eine wässrige Lauge gebildet, in welcher in erhöhter Konzentration Metallionen enthalten sind. Bereits etwa 10% des Goldes weltweit werden auf diese Weise biotechnisch gewonnen.

Diese bekannten Verfahren hängen stark von der Art der Armerze ab und insbesondere von einem geeigneten Oberflächen/Volumen-Verhältnis der zerkleinerten Armerze. Bei einem ungeeigneten Verhältnis und auch bei einer nicht hinreichenden Wasserdurchlässigkeit und ausreichenden Belüftung kann eine wirtschaftliche biologische Laugung beeinträchtigt oder sogar unmöglich werden.

Aus der WO 01/36693 A2 ist ein Verfahren zur Gewinnung von Metallen aus metallhaltigen Erzen bekannt, bei welchem das Erz mit selektiv-schwefeloxidierenden Mikroorganismen in Kontakt gebracht wird, um das Metall in dem Erz in Form einer metallreichen Lauge zu gewinnen, wobei elementarer Schwefel, vor, während oder nachdem die Mikroorganismen mit dem Erz in Kontakt gebracht wurden, beigemengt wird und die metallreiche Lauge von einem Rückstand abgetrennt wird.

Der Erfindung liegt die **Aufgabe** zugrunde, ein Verfahren zum Behandeln eines Rohstoffes anzugeben, mit welchem Mineraldünger gewonnen werden kann.

Die Aufgabe wird nach der Erfindung durch ein Verfahren mit den Merkmalen des Anspruchs 1 gelöst. Bevorzugte Ausführungsformen des Verfahrens sind in den abhängigen Ansprüchen angegeben.

Bei dem erfindungsgemäßen Verfahren ist vorgesehen, dass der Rohstoff in einem im Wesentlichen pulverförmigen Zustand mit Zuschlagstoffen, welche zumindest Elektronendonatoren aufweisen, vermengt und zu einem Granulat mit einer gewünschten Korngröße geformt wird, das dem Rohstoff Mikroorganismen zur biologischen Laugung zugegeben werden, wobei eine Lauge mit Metallionen gebildet wird, und dass die Lauge aufgefangen wird und aus der Lauge die Metallionen abgetrennt werden.

Ein Grundgedanke der Erfindung liegt darin, für eine biologische Laugung möglichst optimale und gleichmäßige Bedingungen zu schaffen. Dies wird nach einem Aspekt der Erfindung dadurch erreicht, dass der pulverförmige Rohstoff mit einem oder mehreren Zuschlagstoffen zu einem Granulat in einer gewünschten Granulatgröße und vorzugsweise auch einer gewünschten Granulatkonsistenz geformt wird. Die durchschnittliche Granulatgröße kann dabei zwischen 1 mm und 50 mm, vorzugsweise zwischen 3 mm und 20 mm liegen. Ausgehend von einem pulverförmigen Rohstoff, wobei der Rohstoff nicht nur feinpulvrig sondern auch kleinere Körner aufweisen kann, werden so Granulate in einem gleichen oder ähnlichen Größenbereich gewonnen, in welchem die Granulatkörner nur um wenige mm in ihrer Größe abweichen.

Abhängig vom zu behandelnden Rohstoff kann so ein günstiges Oberflächen/Volumen-Verhältnis des zu behandelnden Rohstoffes geschaffen werden. Auch kann durch die entsprechenden Zuschlagstoffe die Wasserdurchlässigkeit, die Wasserhaltekapazität, die Luftdurchlässigkeit und Festigkeit für eine Schüttgutlagerung sowie weitere Parameter in gewünschter Weise beeinflusst und eingestellt werden.

Es können so sehr günstige Bedingungen für die Mikroorganismen geschaffen werden, so dass diese ihre gewünschte biologische Aktivität mit guter Wirkung entfalten können.

Dies wird gemäß einem weiteren Aspekt der Erfindung dadurch unterstützt, dass der Zuschlagstoff zumindest Elektronendonatoren aufweist. Hierdurch wird die biologische Laugung ganz maßgeblich unterstützt.

Um eine biologische Laugung sinnvoll einsetzen zu können, müssen verschiedene Voraussetzungen erfüllt sein. So sollte Flüssigkeit, vorzugsweise Wasser in größeren Mengen leicht verfügbar sein und das zu laugende Gut durchdringen können. Weiterhin muss das Laugungsgut die von Mikroorganismen oxidierbaren Stoffe enthalten, also etwa Schwefel, Sulfide, Eisen(II)-Verbindungen, organisches Material. Bei Laugungsgut, das arm an Eisen- und Schwefelverbindungen oder elementarem Schwefel ist, können als Zuschlagstoffe beispielsweise kostengünstiges Pyrit (FeS₂, Schwefelkies = Eisen(II)-disulfid), elementarer Schwefel, Eisen(II)-Sulfat (FeSO₄) oder Eisen(III)-Sulfat (Fe₂(SO₄)₃) oder organisches Materialzugegeben werden. Wenn bei der Biolaugung Lösungen mit den zugewinnenden Metallen in geringer Konzentration entstehen, ist ein Verfahrensschritt zur Metallrückgewinnung vorzusehen. Kostengünstige Möglichkeiten sind insbesondere Extraktion oder Fällung.

Die Bedeutung der Eisen- und Schwefelbakterien liegt bei der Laugung darin, dass sie durch ihre oxidativen Energiestoffwechselprozesse entscheidend dazu beitragen, schwer lösliche Metallsulfide in wasserlösliche auslaugbare Sulfate umzusetzen. Ein erster und wichtiger Schritt zur Auflösung schwer wasserlöslicher Schwermetallsulfide ist etwa die abiotische Oxidation des Sulfidschwefels durch Eisen(III)-Ionen (Fe³⁺) zu elementarem Schwefel (S) oder Thiosulfat (S₂O₃²⁻), wodurch die Metalle als Ionen frei werden und in der wässrigen Lösung gelöst sind. Die Mobilisierung schwer löslicher Oxide (wie zum Beispiel UO₂) erfolgt durch abiotische Oxidation mit Fe³⁺ zum sechswertigen Uran, welches wasserlösliche Uranyl-Ionen (UO₂)²⁺ bildet.

Die Eisen(III)-Ionen werden dabei zu Eisen(II)-Ionen (Fe²⁺) reduziert. Die Rolle der Eisen- und Schwefel-oxidierenden Bakterien besteht darin, die Eisen(II)-Ionen wieder zu Eisen(III)-Ionen zu reoxidieren und damit für die abiotische Oxidation weiteren Metallsulfids oder Metalloxids zur Verfügung zu stellen, und den entstandenen elementaren Schwefel beziehungsweise das entstandene Thiosulfat zu Schwefelsäure zu oxidieren, wodurch die wässrige Lösung angesäuert wird und die Auflösung der Metallsulfide beziehungsweise Oxide begünstigt wird. Durch die abiotische und biotische Oxidation des Sulfids werden also die Metalle aus den Mineralien als gelöste Ionen frei. Hierbei umfasst die biotische Oxidation insbesondere die oxidative Verstoffwechselung der Roh- und Zuschlagstoffe, insbesondere von Sulfiden und Oxiden. Eisen- und Schwefel-oxidierende Bakterien arbeiten auf diese Weise eng zusammen. Schwefelbakterien Acidithiobacillus ferrooxidans (auch Eisen-oxidierend) und Acidithiobacillus thiooxidans erzeugen sogar selbst Schwefelsäure durch Sulfid-, Schwefel- und Thiosulfat-Oxidation. Im Laugungsprozess oxidiert Acidithiobacillus ferrooxidans zweiwertiges zu dreiwertigem Eisen und Acidithiobacillus ferrooxidans, und Acidithiobacillus thiooxidans oxidieren elementaren Schwefel zu Schwefelsäure. Die Oxidation von elementarem Schwefel, Thiosulfat und Fe²⁺-Ionen dient den Mikroorganismen als Energiequelle. Bei der Laugung mit heterotrophen Bakterien und Pilzen liegt deren Bedeutung in der mit der Verstoffwechselung des organischen Substrats einhergehenden Ausscheidung von Stoffwechselprodukten wie organischen Säuren (Citronensäure, Oxalsäure, 2-Ketoglutarsäure) oder anderen Metallchelatierenden Verbindungen.

Durch die Granulation wird also eine hervorragende Energieversorgung der Mikroorganismen bei der biologischen Laugung sichergestellt.

Das erfindungsgemäße Verfahren kann grundsätzlich bei der Gewinnung von Metallen aus Armerzen, etwa von Kupfer, Gold, Kobalt, Nickel etc., eingesetzt werden, wobei die Armerze zunächst entsprechend zu einem pulverförmigen Zustand zermahlen werden. Anschließend erfolgt durch den Schritt der Granulation wieder eine Kornvergrößerung, wobei der eine oder die mehreren Zuschlagstoffe auch eine Bindemittelwirkung besitzen.

Neben dieser Metallgewinnung aus Armerzen liegt ein weiterer wesentlicher Vorteil der Erfindung darin, dass nunmehr zur Metallgewinnung auch Rohstoffe eingesetzt werden können, welche von vornherein in einem pulverförmigen Zustand vorliegen und bisher für eine biologische Laugung praktisch nicht in Frage kamen. Diese Rohstoffe sind insbesondere Aschen, Schlacken und insbesondere Rohphosphate, wie sie bei der Mineraldüngerherstellung zum Einsatz kommen. Aus Aschen und Schlacken, wie sie etwa bei Verbrennungsprozessen, insbesondere bei Heizkraftwerken, anfallen, können so wertvolle Metalle, insbesondere seltene Erden, wirtschaftlich gewonnen werden. Darüber hinaus können bei diesen Stoffen, und insbesondere bei Rohphosphat, unerwünschte Metallanteile, wie giftiges Uran und Cadmium, abgetrennt werden. Es wird insbesondere bei Rohphosphat somit ein zweifacher Nutzeffekt erreicht. Zum einen werden durch eine erfindungsgemäße Vorbehandlung des Rohphosphats in einem erheblichen Umfang Metalle wie Cadmium, Uran und seltene Erden gewonnen. Zum anderen ist ein daraus gewonnener Mineraldünger schadstoffarm und damit wertvoller, da dieser etwa von Cadmium entreichert ist.

Durch das Bilden definierter Granulatkörner wird einerseits erreicht, dass bei Lagerung großer Mengen ein Haufwerk gebildet ist, welches aufgrund der Zwischenräume zwischen den Granulatkörnern eine ausreichende Belüftung und/oder gute Flüssigkeitsdurchlässigkeit sicherstellt. Es können so auch bei großen Lagerungen Haufwerke mit günstigen Eigenschaften für die Mikroorganismen erreicht werden. Andererseits kann durch die gezielte Granulatbildung auch etwa die Wasserhaltigkeit in Granulat eingestellt werden, so dass auch im Granulatkorn selbst günstige Verhältnisse für die Mikroorganismen geschaffen werden.

Eine bevorzugte Weiterbildung der Erfindung kann darin bestehen, dass der Rohstoff zumindest Rohphosphate, Aschen und Schlacken aus Verbrennungsprozessen, Industrieabfälle, Sedimente, kontaminierte Böden und/oder Armerze umfasst. Demnach ist der Rohstoff, welcher der biologischen Laugung zugeführt wird, nicht durch seine jeweilige ursprüngliche Beschaffenheit oder sein Herstellungsverfahren beschränkt.

Eine vorteilhafte Ausführung der Erfindung besteht darin, dass der eine oder mehreren Zuschlagstoffe ein Bindemittel umfasst. Das Bindemittel kann in Form einer Lösung oder als Feststoff mit dem Rohstoff vermengt werden. Dies kann bei der Granulatbildung den Zusammenhalt innerhalb des Granulatkorns fördern.

Besonders bevorzugt ist es nach der Erfindung, dass die Elektronendonatoren zumindest elementaren Schwefel, Eisen(II)-Sulfat, Eisen(III)-Sulfat, Disulfide und/oder organisches Material umfassen. Erfindungsgemäß sind als Elektronendonatoren insbesondere Verbindungen oder Substanzen zu verstehen, welche von Mikroorganismen oxidiert werden können. Elektronendonatoren umfassen nach der Erfindung jedoch auch solche Verbindungen oder Subtanzen, welche erst durch Wechselwirkung mit dem Rohstoff oder mit dem einen oder mehreren Zuschlagstoffen oder in sonstiger Weise in eine von Mikroorganismen oxidierbare Form überführt werden, bevor sie von Mikroorganismen oxidiert werden können. Somit kann als Elektronendonator jegliche Verbindung oder Substanz verstanden werden, welche durch Mikroorganismen in eine oxidierte Form überführt werden können, wobei die oxidierbare Form der jeweiligen Verbindung oder Substanz auch erst nach seiner Zugabe zu dem Rohstoff, nach Bildung oder während der biologischen Laugung des Granults entstehen kann. Die biotische Umwandlung der Elektronendonatoren in ihre oxidierte Form kann eine lebenserhaltende Maßnahme für die Mikroorganismen umfassen.

Eine besonders zweckmäßige Weiterbildung der Erfindung wird dadurch erreicht, dass das Granulat eine Korngröße zwischen 1 mm und 50 mm, vorzugsweise zwischen 3 mm und 20 mm aufweist. Um eine besonders wirkungsvolle Wasserführung, Wasserhaltigkeit sowie Belüftung innerhalb des Granulatkorns zu gewährleisten, kann es vorteilhaft sein, dass das Granulat eine definierte Porosität, also ein definiertes Oberflächen/Volumen-Verhältnis aufweist. Bevorzugterweise sind zwischen 20% und 80% des Volumens des porösen Granulats durch Hohlräume oder Poren gebildet.

Bei unterschiedlicher Beschaffenheit des Rohstoffs, zum Beispiel aufgrund seiner Herkunft, kann eine Veränderung der Korngröße des Granulats sich vorteilhaft auf das Oberflächen/Volumen-Verhältnis im Granulat auswirken. So kann eine reproduzierbare Porosität geschaffen werden, was sich besonders günstig auf die Bedingungen für die Mikroorganismen auswirken kann.

Eine besonders bevorzugte Ausführung der Erfindung sieht vor, dass die Korngrößen des Granulats in einem gleichen, jedoch zumindest in einem ähnlichen Bereich liegen. Eine gleiche oder ähnlich geartete Bemessung der Korngröße im Granulat kann die Bereitstellung eines definierten Oberflächen/Volumen-Verhältnisses im Granulatkorn in besonders zuverlässiger Weise ermöglichen. Liegen die einzelnen Korngrößen des Granulats zu weit auseinander, besteht zudem die Gefahr einer Blockierung der Zwischenräume zwischen den Granulatkörnern durch die kleineren Korngrößen, was zu einer Behinderung der Wasserführung und Belüftung im Granulat führen kann. Ein gleicher oder ähnlicher Größenbereich liegt insbesondere dann vor, wenn weniger als 30% des Granulats eine Größenabweichung von über 50% von der Durchschnittsgröße aufweisen.

Eine besonders vorteilhafte Weiterbildung der Erfindung kann darin bestehen, dass das Granulat durch Extrusion mittels eines Extruders erzeugt wird. Insbesondere kann eine Vermengung des Rohstoffs mit dem einen oder mehreren Zuschlagstoffen innerhalb eines Extruders erfolgen. Zudem kann durch definiertes Einleiten eines Gases, insbesondere von Luft, in den Extruder die Konsistenz der Extrusionsmasse und damit die Porosität der Granulatkörner gezielt eingestellt werden. Die Bildung des Granulats durch Extrusion ermöglicht die Herstellung in einem kontinuierlichen und damit besonders wirtschaftlichen Verfahren. So können in vergleichsweise kurzer Zeit große Mengen des Granulats erzeugt werden.

Eine vorteilhafte Ausführung der Erfindung besteht darin, dass der pulverförmige Rohstoff mit dem einen oder mehreren Zuschlagstoffen in dem Extruder zu einer pastösen Granulatmasse vermengt wird, welche durch ein Formwerkzeug zu Strängen ausextrudiert wird, welche zu dem Granulat in der gewünschten Korngröße abgelängt werden.

Durch Extrusion kann eine gezielte plastische Formbarkeit und Fließfähigkeit der Granulatmasse erreicht werden, sowie ein besonders formstabiles Granulat nach der Ablängung der ausextrudierten Stränge erzeugt werden. Zum Ablängen ist vorzugsweise eine Schneideeinrichtung, insbesondere ein rotierendes Messer, an der Ausgangsseite des plattenförmigen Formwerkzeuges vorgesehen. Durch Druck sowie Zuführung von Gas lässt sich die gewünschte Konsistenz und/oder Porosität einstellen. Insbesondere wird ein Mehrwellen-Extruder, im gleich- oder gegenlaufenden Betrieb, eingesetzt. Dies sorgt für eine gute Vermischung und Vorbehandlung der Extrusionsmasse.

Alternativ kann eine vorteilhafte Ausgestaltung der Erfindung darin bestehen, dass das Granulat durch Agglomeration erzeugt wird. Die Agglomeration kann sowohl im Feuchten als auch im Trockenen erfolgen. Hierbei kann mittels Kapillarkräfte, Bindemittel, Molekularanziehung sowie sich in einander verhakender Bindungen bei zerklüfteter oder faseriger Oberfläche, eine Kornvergrößerung durch Bewegung des zu agglomerierenden Materials erreicht werden. Hierbei kann ein Stoff mehrere der aufgeführten, sowie Eigenschaften aufweisen, die der Agglomeration zuträglich sind.

Eine besonders zweckmäßige Weiterbildung der Erfindung wird dadurch erreicht, dass der mindestens eine Zuschlagstoff ein flüssiges Bindemittel umfasst, welches durch kapillare Bindung zum Bilden des Granulats beiträgt. Unter kapillare Bindung ist insbesondere der Zusammenhalt zwischen festen Bestandteilen des Granulats aufgrund einer oder mehrerer Flüssigkeiten zu verstehen, welche eine Oberflächenspannung aufweisen, wobei die eine oder mehreren Flüssigkeiten sich unmittelbar zwischen den festen Bestandteilen befinden und die festen Bestandteile einen maximalen sowie einen minimalen Abstand aufweisen, welcher die Ausbildung von Kapillareffekten durch die eine oder mehreren Flüssigkeiten ermöglicht.

In flüssiger Form kann das Bindemittel den pulverförmigen Rohstoff besonders gleichmäßig benetzen. Dies kann sich positiv auf eine gleichmäßige Korngrößenbildung des Granulats auswirken.

Eine besonders zweckmäßige Weiterbildung der Erfindung wird dadurch erreicht, dass die Mikroorganismen zur biologischen Laugung Eisen- und/oder Schwefel-oxidierende Bakterien umfassen, insbesondere Acidithiobacillus ferroxidans oder Acidithiobacillus thiooxidans, oder ausgewählte heterotrophe Bakterien und Pilze, wie zum Beispiel Arten der Gattungen Bacillus, Pseudomonas, Aspergillus und Penicillium. Die Mikroorganismen können insbesondere bei der Oxidation von Eisen(II)-Ionen zu Eisen(III)-Ionen und/oder zur Oxidation des Sulfidschwefels, insbesondere in metallhaltigen Verbindungen, oder bei der Oxidation des organischen Materials von Bedeutung sein.

Eine besonders zweckmäßige Weiterbildung der Erfindung wird dadurch erreicht, dass die Eisen- und/oder Schwefel-oxidierenden Bakterien oder die ausgewählten heterotrophen Bakterien und Pilze eine Resistenz gegenüber Schadstoffen, insbesondere Schwermetallen aufweisen und/oder in schwefelsaurer, wässriger Phase überlebensfähig sind. Metallionen, welche durch den Laugungsprozess frei werden, umfassen auch solche Elemente, die für eine Vielzahl von Organismen eine Gefährdung darstellen können, wie beispielsweise Cadmium. Die Verwendung von Mikroorganismen bei der Laugung von Rohstoffen mit metallhaltigen Verbindungen, welche eine Resistenz gegenüber solchen Metallionen aufweisen, kann daher besonders vorteilhaft für das Überleben der Mikroorganismen und somit für das erfindungsgemäße Verfahren sein. Durch die Verstoffwechselung der Zuschlagstoffe sowie der metallhaltigen Verbindungen des Rohstoffs, welche auch Schwefel in oxidierbarer Form aufweisen können, werden durch die Mikroorganismen Verstoffwechselungsprodukte frei. Diese Ausscheidungen können auch Säuren, insbesondere Schwefelsäure umfassen. Sind die Mikroorganismen unter sauren Bedingungen überlebensfähig, entfällt die Notwendigkeit durch entsprechende Stabilisierung des Systems, insbesondere durch Stabilisierung des pH-Werts im Granulat, vorteilhafte Überlebensbedingungen für die Mikroorganismen zu schaffen.

Besonders zweckmäßig ist es nach der Erfindung, dass Mikroorganismen vor der Ausbildung des Granulats dem Rohstoff zugegeben werden. Somit können Mikroorganismen dem Rohstoff vor oder während der Granulierung zugeführt werden. Die Zugabe kann in verschiedenster Form erfolgen, insbesondere durch Besprühen des Rohstoffs und/oder des einen oder mehreren Zuschlagstoffen, sowie als Pulver oder eingekapselt als Granulatkörner. Durch Zugabe von Mikroorganismen vor und während des Granulierens kann eine besonders vorteilhafte Verteilung von Mikroorganismen im Granulat erreicht werden. Insbesondere können bei einer Extrusion die Mikroorganismen in den Extruder eingeführt werden, so dass sich eine besonders gute Durchmischung in der Extrusionsmasse ergibt.

Eine Weiterbildung der Erfindung kann darin gesehen werden, dass das Granulat auf einer Halde als Haufwerk geschichtet und mit Wasser besprüht wird, und aufgrund von Zwischenräumen zwischen den Granulatkörnern eine ausreichende Belüftung, Flüssigkeitsdurchlässigkeit und/oder Versorgung der Mikroorganismen im Granulat mit Eisen/Schwefel sichergestellt ist. Bei diesem Besprühen kann auch eine Beimpfung mit den Mikroorganismen erfolgen.

Das Wasser kann aufgrund der Zwischenräume in besonders vorteilhafter Weise das poröse Granulat umspülen und in dasselbige eindringen, was den Austrag einer Lauge mit Metallionen von der Oberfläche und aus dem Inneren des Granulats begünstigen kann. Die ausgetragene Lauge kann mit Metallionen in einem unteren Bereich des Haufwerks aufgefangen und die in der Lauge befindlichen Metallionen gewonnen werden. Um ein besonders förderliches Klima für Mikroorganismen im Granulat zu schaffen kann es vorteilhaft sein, eine ausreichende Belüftung und Flüssigkeitsdurchlässigkeit innerhalb des Haufwerks sowie innerhalb jedes einzelnen Granulatkorns zu gewährleisten. Als besonders förderliches Klima für Mikroorganismen sind insbesondere Bedingungen zu verstehen, welche es den Mikroorganismen in besonders guter Weise gestatten sich zu vermehren und/oder durch Metabolisierungsprozesse das Lösen von Metallionen aus ihren Verbindungen besonders vorteilhaft zu begünstigen. Das Umspülen und Durchdringen des Granulats mit Wasser kann die Mobilität von Eisen- und Schwefelverbindungen innerhalb des Granulats sowie innerhalb des Haufwerks begünstigen, was sich vorteilhaft auf die Versorgung der Mikroorganismen mit Nährstoffen, insbesondere mit Eisen- und/oder Schwefelverbindungen auswirken kann.

Eine zweckmäßige Weiterbildung der Erfindung kann darin gesehen werden, dass Mikroorganismen dem Granulat vor oder während des Bildens des Haufwerks zugeführt werden. Die Mikroorganismen können durch Besprühen als Lösung, als Pulver oder eingekapselt als Granulatkörner dem Granulat zugeführt werden. Während der Bildung des Haufwerks kann dies beispielsweise in Schichten erfolgen.

## Patentansprüche

1. Verfahren zum Behandeln von Rohphosphat mit metallhaltigen Verbindungen, wobei
- das Rohphosphat in einem im Wesentlichen pulverförmigen Zustand mit einem oder mehreren Zuschlagstoffen, welche zumindest Elektronendonatoren aufweisen, vermengt und zu einem Granulat mit einer gewünschten Korngröße geformt wird,
- dem Rohphosphat Mikroorganismen zur biologischen Laugung zugegeben werden, wobei eine Lauge mit Metallionen gebildet wird und das Rohphosphat von unerwünschten Metallanteilen, welche zumindest Cadmium umfassen, entreichert wird,
- die Lauge aufgefangen wird und aus der Lauge die Metallionen abgetrennt werden und
- aus dem von Cadmium entreicherten Rohphosphat ein Mineraldünger gewonnen wird.

2. Verfahren nach Anspruch 1,
**dadurch gekennzeichnet,**
**dass** die unerwünschten Metallanteile zumindest auch Uran umfassen.

3. Verfahren nach Anspruch 1 oder 2,
**dadurch gekennzeichnet,**
**dass** der eine oder mehreren Zuschlagstoffe ein Bindemittel umfasst.

4. Verfahren nach einem der Ansprüche 1 bis 3,
**dadurch gekennzeichnet,**
**dass** die Elektronendonatoren zumindest elementaren Schwefel, Eisen(II)-Sulfat, Eisen(III)-Sulfat, Disulfide und/oder organisches Materialumfassen.

5. Verfahren nach einem der Ansprüche 1 bis 4,
**dadurch gekennzeichnet,**
**dass** das Granulat eine Korngröße zwischen 1 mm und 50 mm, vorzugsweise zwischen 3 mm und 20 mm aufweist.

6. Verfahren nach einem der Ansprüche 1 bis 5,
**dadurch gekennzeichnet,**
**dass** die Korngrößen des Granulats in einem gleichen, jedoch zumindest in einem ähnlichen Bereich liegen.

7. Verfahren nach einem der Ansprüche 1 bis 6,
**dadurch gekennzeichnet,**
**dass** das Granulat durch Extrusion mittels eines Extruders erzeugt wird.

8. Verfahren nach Anspruch 7,
**dadurch gekennzeichnet,**
**dass** das pulverförmige Rohphosphat mit dem einen oder mehreren Zuschlagstoffen in dem Extruder zu einer pastösen Granulatmasse vermengt wird, welche durch ein Formwerkzeug zu Strängen ausextrudiert wird, welche zu dem Granulat in der gewünschten Korngröße abgelängt werden.

9. Verfahren nach einem der Ansprüche 1 bis 6,
**dadurch gekennzeichnet,**
**dass** das Granulat durch Agglomeration erzeugt wird.

10. Verfahren nach Anspruch 9,
**dadurch gekennzeichnet,**
**dass** der eine oder mehreren Zuschlagstoffe ein flüssiges Bindemittel umfasst, welches durch kapillare Bindung zum Bilden des Granulats beiträgt.

11. Verfahren nach einem der Ansprüche 1 bis 10,
**dadurch gekennzeichnet,**
**dass** die Mikroorganismen zur biologischen Laugung Eisen- und/oder Schwefel-oxidierende Bakterien umfassen, insbesondere Acidithiobacillus ferroxidans oder Acidithiobacillus thiooxidans, oder heterotrophe Bakterien und Pilze, wie insbesondere Arten der Gattungen Bacillus, Pseudomonas, Aspergillus und Penicillium.

12. Verfahren nach Anspruch 11,
**dadurch gekennzeichnet,**
**dass** die Eisen- und/oder Schwefel-oxidierenden Bakterien oder die heterotrophen Bakterien und Pilze eine Resistenz gegenüber Schadstoffen, insbesondere Schwermetallen, aufweisen und/oder in schwefelsaurer, wässriger Phase überlebensfähig sind.

13. Verfahren nach Anspruch 1 bis 12,
**dadurch gekennzeichnet,**
**dass** Mikroorganismen vor der Ausbildung des Granulates dem Rohphosphat zugegeben werden.

14. Verfahren nach einem der Ansprüche 1 bis 13,
**dadurch gekennzeichnet,**
**dass** das Granulat auf einer Halde als Haufwerk geschichtet und mit Wasser besprüht wird, und aufgrund von Zwischenräumen zwischen den Granulatkörnern eine ausreichende Belüftung, Flüssigkeitsdurchlässigkeit und/oder Versorgung der Mikroorganismen im Granulat mit Eisen/Schwefel sichergestellt ist.

15. Verfahren nach Anspruch 14,
**dadurch gekennzeichnet,**
**dass** Mikroorganismen dem Granulat vor oder während des Bildens des Haufwerkes zugeführt werden.

## Claims

1. Method for treating raw phosphate with metalliferous compounds, wherein
- the raw phosphate is mixed in a substantially powdery state with one or several additives, which have at least electron donors, and molded to granules with a desired particle size,
- microorganisms are added to the raw phosphate for biological leaching, wherein a leach with metal ions is formed and the raw phosphate is depleted of undesired metal proportions comprising at least cadmium,
- the leach is collected and the metal ions are separated from the leach and
- a mineral fertilizer is obtained from the raw phosphate depleted of cadmium.

2. Method according to claim 1,
**characterized in that**
the undesired metal proportions at least also comprise uranium.

3. Method according to claim 1 or 2,
**characterized in that**
the one or several additives comprises a binding agent.

4. Method according to any one of claims 1 to 3,
**characterized in that**
the electron donors comprise at least elemental sulfur, iron(II) sulfate, iron(III) sulfate, disulfides and/or organic material.

5. Method according to any one of claims 1 to 4,
**characterized in that**
the granules have a particle size ranging between 1 mm and 50 mm, preferably between 3 mm and 20 mm.

6. Method according to any one of claims 1 to 5,
**characterized in that**
the particle sizes of the granules lie in a same or at least in a similar range.

7. Method according to any one of claims 1 to 6,
**characterized in that**
the granules are produced through extrusion by means of an extruder.

8. Method according to claim 7,
**characterized in that**
in the extruder the powdery raw phosphate is mixed with the one or several additives to a pasty granular mass which is extruded by a molding tool into strands that are cut to the granules in the desired particle size.

9. Method according to any one of claims 1 to 6,
**characterized in that**
the granules are produced through agglomeration.

10. Method according to claim 9,
**characterized in that**
the one or several additives comprises a liquid binding agent which contributes to the formation of the granules through capillary bonding.

11. Method according to any one of claims 1 to 10,
**characterized in that**
the microorganisms for biological leaching comprise iron- and/or sulfur-oxidizing bacteria, in particular Acidithiobacillus ferroxidans or Acidithiobacillus thiooxidans, or heterotrophic bacteria and fungi, such as, in particular, species of the genera Bacillus, Pseudomonas, Aspergillus and Penicillium.

12. Method according to claim 11,
**characterized in that**
the iron- and/or sulfur-oxidizing bacteria or the heterotrophic bacteria and fungi show a resistance to noxious substances, in particular heavy metals, and/or are capable of surviving in a sulfuric, aqueous phase.

13. Method according to claim 1 to 12,
**characterized in that**
microorganisms are added to the raw phosphate prior to the formation of the granules.

14. Method according to any one of claims 1 to 13,
**characterized in that**
the granules are stacked as a pile on a heap and sprayed with water and due to spaces between the granule particles adequate ventilation, liquid permeability and/or supply of the microorganisms in the granules with iron/sulfur is ensured.

15. Method according to claim 14,
**characterized in that**
microorganisms are fed to the granules prior to or during the formation of the pile.

## Revendications

1. Procédé de traitement de phosphore brut doté de liaisons contenant du métal, selon lequel :
- le phosphore brut, dans un état essentiellement sous forme de poudre, est mélangé avec un ou plusieurs additifs, qui comprennent au moins des donneurs d'électrons, et prend la forme d'un ensemble de granulés ayant une taille de grains souhaitée,
- des micro-organismes sont ajoutés au phosphore brut pour une lixiviation biologique, après quoi un lixiviat contenant des ions métalliques est formé et le phosphate brut est appauvri des composants métalliques non souhaités, qui comprennent au moins le cadmium,
- le lixiviat est recueilli et les ions métalliques sont séparés du lixiviat, et
- à partir du phosphate brut appauvri en cadmium, un engrais minéral est obtenu.

2. Procédé selon la revendication 1,
**caractérisé :**
**en ce que** les composants métalliques non souhaités comprennent au moins, également, de l'uranium.

3. Procédé selon la revendication 1 ou 2,
**caractérisé :**
**en ce que** ledit ou lesdits plusieurs additifs comprennent un liant.

4. Procédé selon une des revendications 1 à 3,
**caractérisé :**
**en ce que** les donneurs d'électrons comprennent au moins du soufre élémentaire, du sulfate de fer(II), du sulfate de fer(III), un disulfure et/ou une matière organique.

5. Procédé selon une des revendications 1 à 4,
**caractérisé :**
**en ce que** les granulés ont une taille de grains comprise entre 1 mm et 50 mm, et de préférence entre 3 mm et 20 mm.

6. Procédé selon une des revendications 1 à 5,
**caractérisé :**
**en ce que** les tailles des grains des granulés se situent dans une même zone, ou tout au moins dans une zone similaire.

7. Procédé selon une des revendications 1 à 6,
**caractérisé :**
**en ce que** les granulés sont produits par extrusion au moyen d'une extrudeuse.

8. Procédé selon la revendication 7,
**caractérisé :**
**en ce que** le phosphate brut sous forme de poudre est mélangé dans l'extrudeuse avec ledit ou lesdits plusieurs additifs pour donner une composition de granulés pâteuse, qui, au moyen d'un outil de moulage, est extrudée sous forme de cordons qui sont tronçonnés pour donner les granulés dans la taille de grains souhaitée.

9. Procédé selon une des revendications 1 à 6,
**caractérisé :**
**en ce que** les granulés sont produits par agglomération.

10. Procédé selon la revendication 9,
**caractérisé :**
**en ce que** ledit ou lesdits plusieurs additifs comprennent un liant liquide, qui contribue, par liaison capillaire, à la formation des granulés.

11. Procédé selon une des revendications 1 à 10,
**caractérisé :**
**en ce que** les micro-organismes destinés à la lixiviation biologique comprennent des bactéries destinées à l'oxydation du fer et/ou du soufre, plus particulièrement Acidithiobacillus ferrooxidans ou Acidithiobacillus thiooxidans, ou des bactéries et champignons hétérotrophes, comme par exemple les catégories des genres Bacillus, Pseudomonas, Aspergillus et Penicillium.

12. Procédé selon la revendication 11,
**caractérisé :**
**en ce que** les bactéries destinées à l'oxydation du fer et/ou du soufre ou les bactéries et champignons hétérotrophes présentent une résistance à l'encontre des substances polluantes, comme par exemple les métaux lourds, et/ou sont aptes à survivre dans une phase aqueuse d'acide sulfurique.

13. Procédé selon les revendications 1 à 12,
**caractérisé :**
**en ce que** les micro-organismes sont ajoutés au phosphore brut avant la formation des granulés.

14. Procédé selon une des revendications 1 à 13,
**caractérisé :**
**en ce que** les granulés sont empilés en un amas sous forme de vrac et reçoivent de l'eau sous forme pulvérisée, et, en raison des interstices entre les grains des granulés, une ventilation suffisante, une perméabilité aux liquides et/ou une fourniture des micro-organismes dans les granulés avec du fer/du soufre est ou sont assurée(s).

15. Procédé selon la revendication 14,
**caractérisé :**
**en ce que** les micro-organismes sont apportés aux granulés avant ou pendant la formation de l'amas en vrac.
